Europäisches Patentamt

European Patent Office

Office européen des brevets

(19)

(11) **EP 1 157 311 B1**

(12) **EUROPÄISCHE PATENTSCHRIFT**

| | |
|---|---|
| (45) Veröffentlichungstag und Bekanntmachung des Hinweises auf die Patenterteilung: **02.04.2003  Patentblatt 2003/14** | (51) Int Cl.$^7$: **G05B 17/02**, G05B 23/02 |
| (21) Anmeldenummer: **99964385.1** | (86) Internationale Anmeldenummer: **PCT/DE99/03825** |
| (22) Anmeldetag: **01.12.1999** | (87) Internationale Veröffentlichungsnummer: **WO 00/033146 (08.06.2000 Gazette 2000/23)** |

(54) **VERFAHREN UND ANORDNUNG ZUM ENTWURF EINES TECHNISCHEN SYSTEMS**

METHOD AND DEVICE FOR DESIGNING A TECHNICAL SYSTEM

PROCEDE ET DISPOSITIF POUR L'ETUDE DE CONCEPTION D'UN SYSTEME INDUSTRIEL

| | |
|---|---|
| (84) Benannte Vertragsstaaten: **DE FR GB** | (72) Erfinder:<br>• **SCHÄFFLER, Stefan**<br>  **D-86199 Augsburg (DE)**<br>• **STURM, Thomas**<br>  **D-81673 München (DE)** |
| (30) Priorität: **03.12.1998  DE 19855873** | |
| (43) Veröffentlichungstag der Anmeldung: **28.11.2001  Patentblatt 2001/48** | (56) Entgegenhaltungen:<br>**WO-A-89/03062     WO-A-97/12300**<br>**US-A- 5 119 287     US-A- 5 124 626**<br>**US-A- 5 587 926     US-A- 5 748 508** |
| (73) Patentinhaber: **SIEMENS AKTIENGESELLSCHAFT 80333 München (DE)** | |

**Beschreibung**

Die Erfindung betrifft ein Verfahren und eine Anordnung zum Entwurf eines technischen Systems.

Ein Systemverhalten eines technischen Systems, z.B. einer verfahrenstechnischen Anlage oder eines Systems der Großindustrie, hängt von zahlreichen Parametern ab. Im Rahmen eines Entwurfs solche eines Systems, also insbesondere beim Neuentwurf oder bei der Anpassung bzw. Einstellung eines bereits bestehenden Systems, sind Vorbedingungen, z.B. hinsichtlich der Wirtschaftlichkeit oder der Umweltbelastung des Systems, einzuhalten. Jede Vorbedingung wird als eine Zielfunktion formuliert, die zu optimieren im Hinblick auf die anderen Zielfunktionen allgemeines Bestreben ist.

In [1] ist ein System zur nicht-linearen Prozesskontrolle beschrieben, bei dem eine automatische Kontrolle komplexer Prozesse auch dann möglich ist, wenn Prozessparameter geändert werden und plötzliche oder systematische Änderungen im Prozess auftreten.

Die **Aufgabe** der Erfindung besteht darin, den Entwurf eines technischen Systems anhand von Meßdaten eines vorgegebenen Systems zu ermöglichen. Gerade im Hinblick auf eine Optimierung des bestehenden Systems bzw. auf einen optimierten Neuentwurf eines Systems ist eine derartige Nutzung bekannter Meßdaten von großer Bedeutung.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zum Entwurf eines technischen Systems angegeben, bei dem Meßdaten eines vorgegebenen Systems anhand eines Ersatzmodells beschrieben werden. Es wird eine Maßzahl für die Güte des Ersatzmodells ermittelt, indem die Meßdaten des vorgegebenen Systems mit durch das Ersatzmodell bestimmten Daten verglichen werden. Anhand der Maßzahl für die Güte wird das Ersatzmodell dahingehend angepaßt, daß es eine möglichst hohe Güte aufweist. Das hinsichtlich seiner Güte angepaßte Ersatzmodell wird zum Entwurf des technischen Systems eingesetzt.

Die aus vielen unterschiedlichen realisierten Systemen vorliegenden Meßdaten werden zur Beschreibung des Ersatzmodells eingesetzt. Mit dem Ersatzmodell wird versucht, das vorgegebene System möglichst gut nachzubilden. Die Maßzahl für die Güte der Nachbildung wird ermittelt, indem die realen Meßdaten mit den Daten, die anhand des Ersatzmodells gewonnen werden, verglichen werden. Eine große Differenz zwischen den Meßdaten und den Daten des Ersatzmodells entspricht einer schlechten Güte, also einer schlechten Abbildung des vorgegebenen Systems in das Ersatzmodell. Durch die Maßzahl für die Güte wird das Ersatzmodell dahingehend angepaßt, daß die Güte selbst möglichst hoch wird und somit das Ersatzmodell das vorgegebene System möglichst gut beschreibt. Das so gewonnene Ersatzmodell mit hoher Güte wird zum Entwurf des technischen Systems eingesetzt.

Unter Entwurf werden allgemein verstanden sowohl der Neuentwurf eines technischen Systems als auch die Anpassung bzw. Adaption eines bereits vorhandenen technischen Systems.

Eine Weiterbildung besteht darin, daß das Ersatzmodell ein Regressionsmodell ist. Das Regressionsmodell geht von der Beschreibung

$$y_i = f_\beta(x_i) + e_i$$

aus, wobei

$$(y_i, x_i)$$

vorgegebene Wertepaare,

$f_\beta$    eine Funktion, die von einem Parameter $\beta$ abhängt und
$e_i$    einen Fehler

bezeichnen.

Nun ist der Fehler (als Funktion von $\beta$) zu minimieren:

$$\sum_{i=1}^{n} e_i^2 = \varphi(\beta).$$

Geht man von folgendem Beispiel

$$y = \beta_0 + \beta_1 x + \beta_2 x^2 + e$$

aus, so ist der funktionale Zusammenhang quadratischer Ordnung, das Regressionsmodell (Funktion, abhängig von β) hingegen ist linear.

Die Güte kann in einer anderen Weiterbildung anhand einer quadratischen Abweichung der Meßdaten von den durch das Ersatzmodell bestimmten Daten ermittelt werden. Die Anpassung des Ersatzmodells erfolgt durch Minimierung der quadratischen Abweichung.

Eine Ausgestaltung besteht darin, daß die Meßdaten nach ihrer Güte, bezogen auf deren Abweichung von den durch das Ersatzmodell bestimmten Daten, sortiert werden und eine vorgegebene Anzahl von n% schlechtesten Meßdaten aussortiert werden. Es wird also eine Güte für jedes Meßdatum bestimmt, wobei die Menge der Meßdaten, vorzugsweise in Form einer Liste, nach ihrer Güte sortiert und die n% schlechtesten bzw. die n schlechtesten Meßdaten aussortiert werden. Insbesondere ist zu prüfen, ob die n% bzw. die n schlechtesten Meßdaten in einem zusammenhängenden Bereich liegen. Ist dies der Fall, so werden diese Meßdaten nicht aussortiert, da sie mit hoher Wahrscheinlichkeit keine Meßfehler, sondern einen zusammenhängenden Bereich bestimmen, der durch das Ersatzmodell nicht ausreichend genau abgebildet wurde.

Eine andere Weiterbildung besteht darin, daß die Meßdaten einer Vorverarbeitung unterzogen werden. Da in einem realen vorgegebenes System eine große Menge an Meßdaten pro Zeiteinheit anfallen, ist es sinnvoll, diese Meßdaten einer Vorverarbeitung zu unterziehen und somit zu gewährleisten, daß weitgehend signifikante Meßdaten in die Bildung des Ersatzmodells einfließen. Bevorzugt findet die Vorverarbeitung in einer Reduktion der Anzahl von Meßdaten ihre Ausprägung.

Dabei werden die Meßdaten entsprechend vorgegebener Kriterien in Klassen eingeteilt. Die Meßwerte einer Klasse werden bewertet und diejenigen Meßwerte, deren Bewertung unterhalb eines vorgegebenen ersten Schwellwertes liegt, werden aussortiert. Durch die Aussortierung der Meßwerte ergibt sich eine Reduktion hinsichtlich der Anzahl der Meßwerte. Somit liegen für eine Weiterverarbeitung eine deutlich reduzierte Anzahl von Meßwerten vor. Die Weiterverarbeitung kann mit gegenüber der nicht reduzierten Anzahl von Meßwerten geringerem Rechenaufwand erfolgen.

Auch können die Klassen selbst bewertet werden. Insbesondere kann eine Klasse, deren Bewertung unterhalb eines vorgegebenen zweiten Schwellwerts liegt, aussortiert werden. Hierdurch ergibt sich eine zusätzliche Reduktion der Anzahl der Meßwerte.

Eine andere Weiterbildung der Vorverarbeitung besteht darin, daß ein Kriterium für die Klasseneinteilung darin besteht, daß pro Klasse Meßwerte zu einer Vorgabe von Einstellparametern des technischen Systems bestimmt werden. Typischerweise wird das technische System anhand einer vorgegebenen Anzahl von Einstellparametern eingestellt, nach Einstellung erfolgt eine (zumeist zeitverzögerte) Reaktion des Systems auf die Einstellparameter (Einschwingverhalten, Einschwingvorgang des Systems) Nach Einstellung werden somit eine bestimmte Menge an Meßwerten aufgenommen, die dem Einschwingvorgang zugeordnet werden können, wobei nach abgeschlossenem Einschwingvorgang (Übergang in den stationären Betrieb) weiterhin Meßwerte anfallen, die dem vorgegebenen Satz Einstellparameter zugeordnet werden. Durch Verstellung der Einstellparameter wird eine neue Klasse bestimmt. Alle Meßwerte, die jeweils nach einer Verstellung der Einstellparameter anfallen, gehören in eine eigene Klasse.

Zusätzlich können Meßwerte einer Klasse, die dem jeweiligen Einschwingvorgang zuordenbar sind, aussortiert werden. Weiterhin können fehlerhafte Meßwerte aussortiert werden. Die Einstellung großer technischer Systeme ist in vielen Fällen auf eine langfristigen stationären Betrieb ausgerichtet. Meßwerte, die sich auf den Einschwingvorgang (von kurzer Dauer im Verhältnis zum stationären Betrieb nach abgeschlossenem Einschwingvorgang) beziehen, werden sinnvoll aussortiert, da durch sie Meßwerte für den stationären Betrieb verfälscht werden. Insbesondere im Rahmen einer Modellierung des technischen Systems, sind die Meßdaten des stationären Verhaltens des technischen Systems interessant.

Eine Ausgestaltung besteht darin, die Anzahl der Meßwerte in einer Klasse dadurch zu reduzieren, daß mindestens ein repräsentativer Wert für die Meßwerte der Klasse bestimmt wird. Solch ein repräsentativer Wert kann sein:

a) ein Mittelwert (z.B. ein gleitender Mittelwert) der Meßwerte der Klasse,

b) ein Maximalwert der Meßwerte der Klasse,

c) ein Minimalwert der Meßwerte der Klasse,

d) ein Median.

Bei Variante d) liegt ein Vorteil darin, daß immer ein Wert bestimmbar ist, den es tatsächlich gibt, wohingegen der Mittelwert a) selbst nicht als Wert vorkommt.

Je nach Anwendungsfall, kann eine geeignete Wahl zur Bestimmung des repräsentativen Werts einer Klasse erfolgen.

Eine ganze Klasse mit Meßwerten kann aussortiert werden, wenn diese weniger als eine vorgegebene Anzahl Meßwerte enthält.

Eine andere Ausgestaltung besteht darin, daß diejenigen Meßwerte aussortiert werden, die um mehr als einen vorgegebenen Schwellwert von einem vorgebbaren Wert verschieden sind. Der vorgebbare Wert kann ein Mittelwert aller Meßwerte der Klasse oder ein zu erwartender Meßwert auf die jeweiligen Einstellparameter des technischen Systems sein.

Im Rahmen einer anderen Weiterbildung werden die mittels Entwurf gewonnenen Daten zur Steuerung einer technischen Anlage eingesetzt. Zusätzlich kann die Steuerung der technischen Anlage zur Laufzeit des Systems, also Online, erfolgen.

Auch wird zur Lösung der Aufgabe eine Anordnung zum Entwurf eines technischen Systems angegeben, die eine Prozessoreinheit aufweist, welche Prozessoreinheit derart eingerichtet ist, daß Meßdaten eines vorgegebenen Systems anhand eines Ersatzmodells beschreibbar sind. Eine Maßzahl für die Güte des Ersatzmodells ist ermittelbar, indem die Meßdaten des vorgegebenen Systems mit durch das Ersatzmodell bestimmten Daten verglichen werden. Aus der Maßzahl für die Güte ist das Ersatzmodell dahingehend anpaßbar, daß es eine möglichst hohe Güte aufweist. Das hinsichtlich seiner Güte angepaßte Ersatzmodell ist zum Entwurf des technischen Systems einsetzbar.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig.1 ein Blockdiagramm, das Schritte eines Verfahrens zum Entwurf eines technischen Systems enthält;

Fig.2 eine schematische Skizze eines Recovery-Boilers;

Fig.3-5 Eingangsgrößen, Stellgrößen und Ausgangsgrößen des Recovery-Boilers.

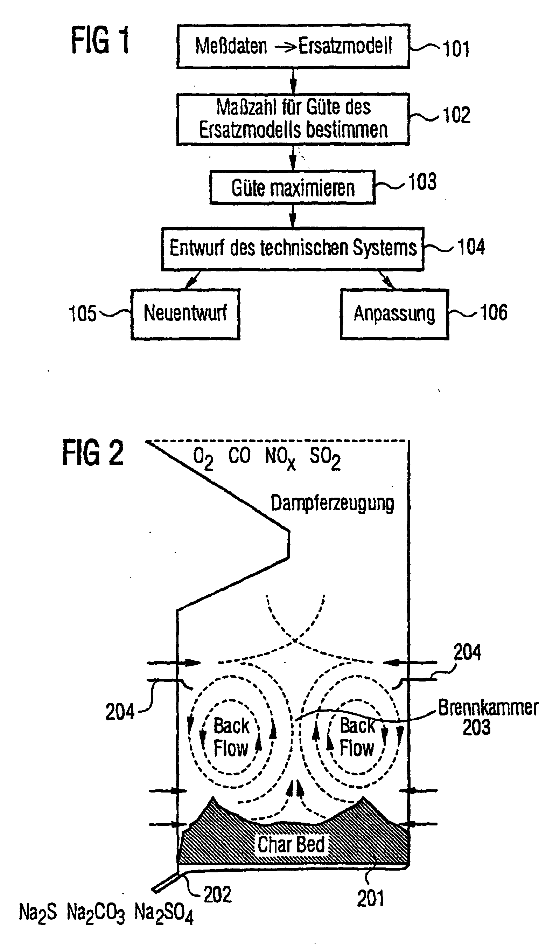

In **Fig.1** ist ein Blockdiagramm dargestellt, das Schritte eines Verfahrens zum Entwurf eines technischen Systems enthält. In einem Schritt 101 wird anhand von Meßdaten ein Ersatzmodell gebildet. Bevorzugt ist dieses Ersatzmodell ein Regressionsmodell. Um das in Schritt 101 entstandene Ersatzmodell auf die Meßdaten anzupassen, also eine Verfeinerung des Ersatzmodells vorzunehmen, so daß die Meßdaten das Ersatzmodell in ausreichender Näherung beschreiben, wird in einem Schritt 102 eine Maßzahl für die Güte des Ersatzmodells bestimmt. Diese Maßzahl wird bestimmt, indem die Meßdaten des vorgegebenen Systems mit durch das Ersatzmodell bestimmten Daten verglichen werden. Bevorzugt erhält jedes Meßdatum eine Maßzahl für die Güte, welche Maßzahl die Abweichung des Meßdatums mit dem zugehörigen von dem Ersatzmodell bestimmten Wert kennzeichnet. Die Summe aller Maßzahlen für die Güte für alle Meßdaten bestimmt eine Gesamtgüte für das Ersatzmodell. In einem Schritt 103 wird die Güte maximiert, indem die Maßzahl für die Güte (bzw. eine negative Güte für die Übereinstimmung des Ersatzmodells mit dem vorgegebenen System) minimiert wird. Ist eine entsprechend hohe Güte für das Ersatzmodell bestimmt, so wird in einem Schritt 104 dieses Ersatzmodell für den Entwurf des technischen Systems eingesetzt. Der Entwurf kann sowohl ein Neuentwurf (vgl. Schritt 105) oder eine Anpassung eines schon bestehenden technischen Systems (vgl. Schritt 106) sein.

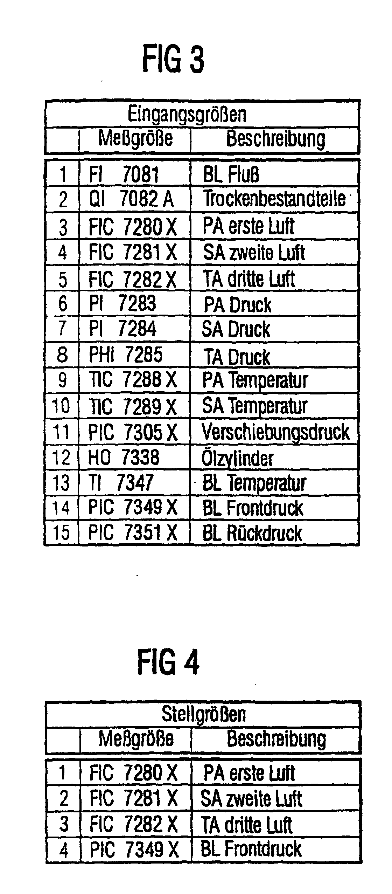

**Fig.2** zeigt eine schematische Skizze eines Recovery-Boilers. Nachfolgend wird anhand des Beispiels "Recovery-Boiler" ein Ausführungsbeispiel des oben beschriebenen Verfahrens veranschaulicht.

In der Papier- und Zellstoffindustrie werden zum Aufschluß von Zellstoff verschiedene Chemikalien sowie Wärme und Elektroenergie benötigt. Aus einer eingedeckten Prozeßablauge (Schwarzlauge) lassen sich mit Hilfe des Recovery-Boilers die verwendeten Chemikalien und zusätzlich Wärmeenergie zurückgewinnen. Ein Grad für die Zurückgewinnung der Chemikalien ist von entscheidender Bedeutung für die Wirtschaftlichkeit der Gesamtanlage.

Die Schwarzlauge wird in einem Schmelzbett 201 verbrannt. Dabei bildet sich eine Alkalischmelze, die über eine Leitung 202 abfließt. Aus den Bestandteilen der Alkalischmelze werden in weiteren Verfahrensschritten die eingesetzten Chemikalien zurückgewonnen. Frei gewordene Verbrennungswärme wird zur Erzeugung von Wasserdampf genutzt. Die Verbrennung der Ablauge und damit die Rückgewinnung der Chemikalien beginnt mit der Zerstäubung der Schwarzlauge über Zerstäuberdüsen 204 in eine Brennkammer 203. Partikel der zerstäubten Schwarzlauge werden bei ihrem Fall durch das heiße Rauchgas getrocknet. Die getrockneten Laugenpartikel fallen auf das Schmelzbett 201, wobei eine erste Verbrennung und eine chemische Reduktion stattfinden. Flüchtige Bestandteile und Reaktionsprodukte gelangen in eine Oxidationszone, in der oxidierende Reaktionen ablaufen und in der die Verbrennung abgeschlossen wird.

Wichtige Zielvorgaben für die Steuerung des Recovery-Boilers sind die Dampfproduktion zur Energiegewinnung, die Einhaltung von Emissionswerten unter Umweltgesichtspunkten und die Effizienz der chemischen Reduktion.

Der Verbrennungsvorgang, und damit die Zielvorgaben, werden insbesondere durch die Luftzufuhr in drei Ebenen (Primary Air (PA), Secondary Air (SA), Tertiary Air (TA)) gesteuert. Der Gesamtprozeß unterliegt zahlreichen Einflüssen, die bei der Modellierung zu berücksichtigen sind:

a) Die Messung der Größen unterliegen oftmals starken Schwankungen;

b) Es existieren nicht gemessene und nicht meßbare Einflußgrößen;

c) Bei jeder Änderung der einstellbaren Parameter kommt es zu Einschwingvorgängen;

d) Die technische Anlage verschmutzt und wird in vorgegebenen Abständen gereinigt, wodurch im Systemverhalten jeweils ein zeitlicher Drift bewirkt wird.

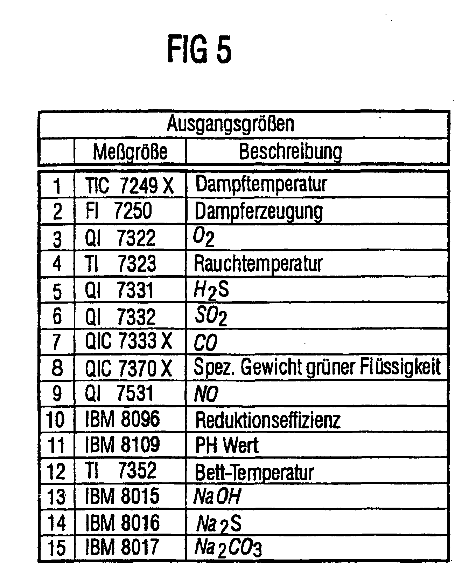

Die gemessenen Größen des Gesamtprozesses werden in Eingangsgrößen (vgl. **Fig.3**) und Ausgangsgrößen (vgl. **Fig.5**) unterteilt. Jede Minute werden Meßwerte abgespeichert. Vier der Eingangsgrößen sind gleichzeitig auch Stellgrößen (auch: einstellbare Parameter; vgl. **Fig.4**). Die Stellgrößen sind im wesentlichen als unabhängig voneinander einstellbare freie Parameter des Gesamtprozesses anzusehen. Einige der anderen Eingangsgrößen sind von den Stellgrößen mehr oder minder abhängig. Gemäß einer Vorgabe sind beim Recovery-Boiler die Größen "BL Front Pressure" und "BL Back Pressure" stets gleich zu regeln. Die vier Stellgrößen (vgl. Fig.4) sind vorzugsweise abzuspeichern als Stellgrößen (mit dem gewünschten, voreingestellten Wert) und als Eingangsgrößen (mit dem gemessenen, realen Wert).

Beim Recovery-Boiler besteht eine Problemstellung darin, in Abhängigkeit von den einstellbaren Parametern bestimmte Zielvorgaben, die über gemessene Größen definiert werden, zu erfüllen. Hier wird eine dreistufige Vorgehensweise zur Lösung des Problems gewählt:

1. Die zu betrachtenden Zielvorgaben werden durch stochastische Methoden modelliert, wobei diese Modelle durch neue Messungen aktualisiert werden (datengetriebene, empirische Modellierung). Dabei ist es sinnvoll, nicht nur ein einziges Modell zu verwenden, sondern globale Modelle für die Identifikation interessanter Gebiete in einem durch die Zielvorgaben bestimmten Parameterraum und lokale Modelle zur exakten Berechnung optimaler Arbeitspunkte einzusetzen. Die verwendeten Modelle werden durch Gütemaße bewertet.

2. Falls die betrachteten Modelle aufgrund der Datenlage nicht hinreichend genau sind (Gütemaße), werden gezielt neue Arbeitspunkte zur Modellverbesserung ausgewertet (Experimental Design). Ferner werden durch Verwendung globaler stochastischer Optimierungsverfahren bzgl. der Zielvorgaben attraktive Gebiete in Abhängigkeit vom aktuellen globalen Modell identifiziert.

3. Für die lokale Optimierung werden lokale Modelle konstruiert und die zur Verfügung stehenden Datensätze gegebenenfalls gezielt erweitert (Experimental Design).

Bei den Zielvorgaben handelt es sich um physikalischtechnische bzw. betriebswirtschaftliche Kriterien, die in der Regel Randbedingungen und/oder Sicherheitsbedingungen entsprechen müssen. Häufig sind mehrere dieser Kriterien gleichzeitig zu betrachten. Die Verwendung eines stochastischen Modells kann insbesondere dazu verwendet werden, die zu optimierenden Zielgrößen und ihre Abhängigkeit von den einzustellenden Parametern im Rechner zu simulieren. Dies ist dann notwendig, wenn Messungen sehr kostenintensiv bzw. sehr zeitaufwendig sind. Bei Sicherheitsanforderungen können mögliche Gefahrensituationen vermieden werden.

Beim Recovery-Boiler ist eine Online-Optimierung, die auf mehreren Daten basiert, notwendig, weil die physikalischchemischen Prozesse nicht mit ausreichender Genauigkeit quantitativ modelliert werden können und weil das Verhalten der Anlage im Verlauf des Betriebs Schwankungen unterliegt. Das Wissen über dieses Verhalten muß stetig durch gezielte Wahl neuer Arbeitspunkte erweitert werden. Daher empfiehlt sich im Rahmen der Online-Optimierung das bereits beschriebene dreistufige Vorgehen der stochastischen Modellierung und der mathematischen Optimierung.

BESCHREIBUNG DER EINGANGSGRÖSSEN

Die a Eingangsgrößen (a $\in \mathbb{N}$, $\mathbb{N}$: Menge der natürlichen Zahlen) sind im allgemeinen von n Stellgrößen n $\in \mathbb{N}$ und von Zufallseffekten abhängig. Sie können wie folgt beschrieben werden:

Es seien ($\Omega, \mathcal{S}, \mathcal{P}$) ein Wahrscheinlichkeitsraum und $\mathcal{B}^v$ eine Borelsche $\sigma$-Algebra über $\mathbb{R}^v$ ($\mathbb{R}$: Menge der reellen Zahlen) für jedes $v \in \mathbb{N}$. Die Eingangsgrößen werden über eine $\mathcal{B}^n \times \mathcal{S}$ - $\mathcal{B}^a$-meßbare Abbildung $\varphi$ dargestellt:

$$\varphi : \mathbb{R}^n \times \Omega \to \mathbb{R}^a \qquad (1).$$

Die Definitionsmenge der Abbildung $\varphi$ ist ein kartesisches Produkt zweier Mengen. Betrachtet man die jeweiligen Projektionen auf die Einzelmengen, so erhält man folgende Abbildungen:

$$\varphi_x : \Omega \to \mathbb{R}^a, \omega \to \varphi(x, \omega) \quad \text{für alle } x \in \mathbb{R}^n \qquad (2),$$

$$\varphi^\omega : \mathbb{R}^n \to \mathbb{R}^a, x \to \varphi(x, \omega) \quad \text{für alle } \omega \in \Omega \qquad (3).$$

$$\left\{ \varphi_x; \ x \in \mathbb{R}^n \right\}$$

ist ein stochastischer Prozeß mit einer Indexmenge $\mathbb{R}^n$ und eine Abbildung $\varphi^\omega$ ist für jedes Ereignis $\omega \in \Omega$ ein Pfad dieses stochastischen Prozesses.

Beim Recovery-Boiler ist n=4 und a=14 (nach Elimination der Größe "BL Back Pressure").

Aufgrund der geforderten Meßbarkeit der Abbildung $\varphi_x$ ist für jedes $x \in \mathbb{R}^n$ die Abbildung $\varphi_x$ eine Zufallsvariable. Unter geeigneten Zusatzvoraussetzungen können Erwartungswerte und höhere Momente betrachtet werden. Dieser Zugang ermöglicht den Schritt von stochastischen Modellen zu deterministischen Optimierungsproblemen. Bei einem deterministischen Optimierungsproblem ist die Zielfunktion direkt mittels einer Variablen einstellbar, wohingegen die stochastische Größe die Zielfunktion beeinflußt, aber keine gezielte Einstellung ermöglicht.

BESCHREIBUNG DER AUSGANGSGRÖßEN

Das Prozeßmodell M des Recovery-Boilers wird als Funktion in Abhängigkeit von den Eingangsgrößen und weiteren Zufallseffekten beschrieben. Dabei sei ($\Omega, \mathcal{S}, \mathcal{P}$) der obige Wahrscheinlichkeitsraum. Das Prozeßmodell M ist dann eine $\mathcal{B}^a \times \mathcal{S}$ - $\mathcal{B}^b$-meßbare Abbildung:

$$M : \mathbb{R}^a \times \Omega \to \mathbb{R}^b \qquad (4),$$

wobei b die Anzahl der Ausgangsgrößen bezeichnet.

Da der Recovery-Boiler einem zyklischen zeitlichen Drift unterliegt (von Reinigungsphase zu Reinigungsphase), ist zudem eine Beschreibung mit einem Zeitparameter denkbar. Die Ausgangsgrößen lassen sich durch $\mathcal{B}^n \times \mathcal{S}$ - $\mathcal{B}^b$-meßbare Abbildungen $\psi$ darstellen:

$$\psi : \mathbb{R}^n \times \Omega \to \mathbb{R}^b \qquad (5),$$

**6**

$$(x, \omega) \to M\big(\varphi(x, \omega), \omega\big) \tag{6}.$$

Betrachtet man die jeweiligen Projektionen auf die Einzelmengen der Definitionsmenge, so erhält man folgende Abbildungen

$$\psi_x : \Omega \to \mathbf{R}^b, \; \omega \to \psi(x, \omega) \quad \text{für alle } x \in \mathbf{R}^n \tag{7},$$

$$\psi^\omega : \mathbf{R}^n \to \mathbf{R}^b, \; x \to \psi(x, \omega) \quad \text{für alle } \omega \in \Omega \tag{8}.$$

$$\left\{ \psi_x; \; x \in \mathbf{R}^n \right\}$$

ist ein stochastischer Prozeß mit einer Indexmenge $\mathbf{R}^n$ und die Abbildung $\psi^\omega$ ist für jedes $\omega \in \Omega$ ein Pfad dieses stochastischen Prozesses.

Beim Recovery-Boiler ist b=15.

Die Tatsache, daß bei der Definition von $\psi$ zwischen den verwendeten Ereignissen $\omega$ nicht unterschieden wird, bedeutet keine Einschränkung, da $\Omega$ als kartesisches Produkt aus einem $\Omega_1$ und einem $\Omega_2$ dargestellt werden kann. Die obige Darstellung umfaßt somit auch das Modell:

$$\psi : \mathbf{R}^n \times \Omega_1 \times \Omega_2 \to \mathbf{R}^b \tag{9},$$

$$(x, \omega_1, \omega_2) \to M\big(\dot{\varphi}(x, \omega_1), \omega_2\big) \tag{10}.$$

BESCHREIBUNG DER ZUR VERFÜGUNG STEHENDEN DATENSÄTZE

Mit den Beschreibungen in den beiden vorangegangenen Abschnitten kann man die Eingangsgrößen und die Ausgangsgrößen gemeinsam zu Meßgrößen (=Meßdaten) $\Phi$ zusammenfassen. $\Phi$ ist eine $\mathbf{s}^n \times \mathbf{S}$ - $\mathbf{s}^m$ -meßbare Abbildung mit m = a + b und

$$\Phi : \mathbf{R}^n \times \Omega \to \mathbf{R}^m \tag{11},$$

$$(x, \omega) \to \begin{pmatrix} \varphi(x, \omega) \\ \psi(x, \omega) \end{pmatrix} \tag{12}.$$

Betrachtet man wieder die jeweiligen Projektionen auf die Einzelmengen der Definitionsmenge, so erhält man folgende Abbildungen:

$$\Phi_x : \Omega \rightarrow \mathbb{R}^m, \; \omega \rightarrow \Phi(x, \omega) \quad \text{für alle } x \in \mathbb{R}^n \tag{13},$$

$$\Phi^\omega : \mathbb{R}^n \rightarrow \mathbb{R}^m, \; x \rightarrow \Phi(x, \omega) \quad \text{für alle } \omega \in \Omega \tag{14}.$$

$$\left\{ \Phi_x; \; x \in \mathbb{R}^n \right\}$$

ist ein stochastischer Prozeß mit einer Indexmenge $\mathbb{R}^n$ und die Abbildung $\Phi^\omega$ ist für jedes $\omega \in \Omega$ ein Pfad dieses stochastischen Prozesses.

Für jedes gewählte Stellgrößentupel x werden beim Recovery-Boiler viele Realisierungen von $\Phi_x$ ermittelt und abgespeichert, d.h. zu jedem $x_j \in \mathbb{R}^n$ werden zahlreiche Realisierungen

$$\Phi_{jk} := \Phi\left( x_j, \omega_{jk} \right) \tag{15}$$

mit

$$\omega_{jk} \in \Omega; \; k = 1,2,..., v_j;$$

$$v_j \in \mathbb{N}; \; j = 1,2,..., u; \; u \in \mathbb{N}$$

betrachtet. Die gespeicherten Datensätze $D_{jk}$ des Recovery-Boilers sind also $(n + m)$-Tupel:

$$D_{jk} = \begin{pmatrix} x_j \\ \Phi_{jk} \end{pmatrix}, \qquad k = 1,2,\ldots, v_j; \; j = 1,2,\ldots, u \tag{16}.$$

Dabei wird $D_{j_1 k_1}$ vor $D_{j_2 k_2}$ abgespeichert, wenn

$$\left( j_1 < j_2 \right) \vee \left( \left( j_1 = j_2 \right) \wedge \left( k_1 < k_2 \right) \right)$$

gilt.

DATENKOMPRESSION DURCH KLASSENEINTEILUNG DER PARAMETER

Da für jedes Stellgrößentupel x im allgemeinen mehrere Realisierungen von $\Phi_x$ vorliegen, bietet sich aufgrund der komplexen stochastischen Eigenschaften des zu betrachtenden Prozesses als erster Schritt der statistischen Datenanalyse eine Klasseneinteilung der Parameter durch Bildung arithmetischer Mittelwerte an. Zudem werden offensichtlich fehlerhafte Datensätze ausgesondert. Ein offensichtlich fehlerhafter Datensatz ist bspw. eine physikalisch unmögliche Messung, der insbesondere aufgrund einer vorgenommenen Einstellung real gar nicht vorkommen kann.

Vorgehensweise:

1. Datensätze, bei denen die Größe "BL Front Pressure" ungleich der Größe "BL Back Pressure" ist, werden aussortiert, da diese beiden Werte nach Vorgabe der Anlagensteuerung gleich sein müssen. Der Datenverlust ist sehr gering.

2. Die Datensätze werden auf Klassen aufgeteilt, in denen die vier Einstellparameter (PA, SA, TA, BL Front Pressure, siehe oben) zeitlich aufeinanderfolgend konstant sind, d.h. die j-te Klasse besteht aus den Datensätzen $D_{j\bullet}$.

3. Klassen, in denen sich weniger als 30 Datensätze befinden, werden ausgesondert, damit Einschwingvorgänge keinen großen Einfluß haben.

4. Für jede Klasse werden ein arithmetischer Mittelwert $\overline{\Phi}_j$ und eine empirische Standardabweichung $s_j$ für alle Meßgrößen ermittelt:

$$\overline{\Phi}_j \;=\; \frac{1}{v_j} \cdot \sum_{k=1}^{v_j} \Phi_{jk} \tag{17},$$

$$s_j \;=\; \begin{pmatrix} \left( \dfrac{1}{v_j - 1} \cdot \displaystyle\sum_{k=1}^{v_j} \left( \Phi_{jk}^{(1)} - \overline{\Phi}_j^{(1)} \right)^2 \right)^{\frac{1}{2}} \\[2mm] \vdots \\[2mm] \left( \dfrac{1}{v_j - 1} \cdot \displaystyle\sum_{k=1}^{v_j} \left( \Phi_{jk}^{(m)} - \overline{\Phi}_j^{(m)} \right)^2 \right)^{\frac{1}{2}} \end{pmatrix} \tag{18}.$$

5. Klassen bei denen die Mittelwerte für die Größen PA, SA, TA oder BL Front Pressure zu weit von den entsprechenden Einstellparametern entfernt sind, werden ausgesondert. Auf diesen Klassen konnten also die Einstellwerte nicht erreicht werden.

STATISTISCHE KENNGRÖßEN FÜR DIE GEGEBENEN KLASSEN UND IHRE GRAPHISCHE DARSTELLUNG

Neben den arithmetischen Mittelwerten und den empirischen Standardabweichungen, die für die einzelnen Klassen bestimmt wurden, wird noch eine gemeinsame Standardabweichung s bestimmt gemäß

$$s = \left( \begin{array}{c} \left( \dfrac{1}{v-1} \cdot \displaystyle\sum_{j=1}^{u} \left(v_j - 1\right)s_j^{(1)2} \right)^{\frac{1}{2}} \\ \vdots \\ \left( \dfrac{1}{v-1} \cdot \displaystyle\sum_{j=1}^{u} \left(v_j - 1\right)s_j^{(m)2} \right)^{\frac{1}{2}} \end{array} \right) \qquad (19)$$

Dabei steht u für die Anzahl der Klassen (hier 205) und v für die Summe der $v_j$, d.h. v ist die Anzahl aller verwendeten Meßwerte (hier 38915).

LINEARE REGRESSIONSMODELLE FÜR FUNKTIONSAPPROXIMATIONEN

Für jede Meßgröße (Meßdatum) $\Phi^{(i)}$ (i=1,2,...,m) wird, basierend auf dem arithmetischen Mittel über die Klassen, ein lineares Regressionsmodell in Abhängigkeit von der quadratischen Kombination der vier Einstellparameter berechnet. In der folgenden Darstellung ist $x \in \mathbb{R}^4$, wobei

$x^{(1)}$ :   Primary Air (PA)

$x^{(2)}$ :   Secondary Air (SA)

$x^{(3)}$ :   Tertiary Air (TA)

$x^{(4)}$ :   Black Liquor (BL) Front Pressure

gilt. $u \in \mathbb{N}$ bezeichnet die Anzahl der Klassen. Jede Meßgröße $\Phi^{(i)}$ wird durch

$$\Phi^{(i)}(x, \omega) = a_i^T r(x) + e_i(\omega) \qquad (20)$$

mit $a_i \in \mathbb{R}^{15}$ modelliert. Dabei gelten

$$r : \mathbb{R}^4 \rightarrow \mathbb{R}^{15} \qquad (21)$$

$$\left(\zeta_1, \zeta_2, \zeta_3, \zeta_4\right)^T \rightarrow \left(1, \zeta_1, \zeta_2, \zeta_3, \zeta_4, \zeta_1^2, \zeta_2^2, \zeta_3^2, \zeta_4^2, \zeta_1\zeta_2, \zeta_1\zeta_3, \zeta_1\zeta_4, \zeta_2\zeta_3, \zeta_2\zeta_4, \zeta_3\zeta_4\right)^T \qquad (22),$$

d.h. Polynome zweiten Grades werden an die Meßdaten angepaßt, und

$$e_i : \Omega \rightarrow \mathbb{R} \qquad (23)$$

ist eine Zufallsvariable mit Erwartungswert 0.

Der Vektor $a_i$ wird mit der Methode der kleinsten Fehlerquadrate bestimmt, allerdings werden statt der Originaldatensätze

$$\left(x_j, \Phi_{jk}^{(i)}\right)^T$$

die arithmetischen Mittel

$$\left(x_j, \overline{\Phi}_{jk}^{(i)}\right)^T$$

verwendet. Diese Vorgehensweise eignet sich, da durch lineare Regressionsmodelle insbesondere Erwartungswerte geschätzt werden. Somit erhält man das Minimierungsproblem:

$$\min_{a_i \in \mathbf{R}^{15}} \left\{ \left\| \begin{pmatrix} \overline{\Phi}_1^{(i)} \\ \vdots \\ \overline{\Phi}_u^{(i)} \end{pmatrix} - \begin{pmatrix} r(x_1)^T \\ \vdots \\ r(x_u)^T \end{pmatrix} \cdot \begin{pmatrix} a_i^{(1)} \\ \vdots \\ a_i^{(15)} \end{pmatrix} \right\|_2^2 \right\} \qquad (24).$$

Es sei $\overline{a}_i$ der optimale Punkt des quadratischen Minimierungsproblems aus Gleichung (24). Ferner gelte:

$$\hat{y}_i := \begin{pmatrix} r(x_1)^T \\ \vdots \\ r(x_u)^T \end{pmatrix} \cdot \begin{pmatrix} \overline{a}_i^{(1)} \\ \vdots \\ \overline{a}_i^{(15)} \end{pmatrix} \in \mathbf{R}^u \qquad (25),$$

$$\overline{y}_i := \frac{1}{u} \cdot \sum_{j=1}^{u} \overline{\Phi}_j^{(i)} \in \mathbf{R} \qquad (26).$$

Zur Validierung des Regressionsansatzes wird ein Bestimmtheitsmaß $R^2$ berechnet gemäß

$$R^2 := \frac{\sum_{j=1}^{u} \left(\hat{y}_i^{(j)} - \overline{y}_i\right)^2}{\sum_{j=1}^{u} \left(\overline{\Phi}_j^{(i)} - \overline{y}_i\right)^2} = \frac{\hat{y}_i^T \hat{y}_i - u\overline{y}_i^2}{\overline{\Phi}^{(i)T}\overline{\Phi}^{(i)} - u\overline{y}_i^2} \qquad (27)$$

mit

$$\overline{\Phi}^{(i)} = \begin{pmatrix} \overline{\Phi}_1^{(i)} \\ \vdots \\ \overline{\Phi}_u^{(i)} \end{pmatrix} \qquad\qquad (28).$$

Je näher $R_i^2$ bei 1 liegt, desto besser wird die abhängige Variable durch die unabhängigen Variablen dargestellt

$$\left(0 \le R_i^2 \le 1\right).$$

Zusätzlich wird ein Maximum $E_{max}^{(i)}$ für einen Absolutwertes der Abweichung der Daten vom Modell angegeben als

$$E_{max}^{(i)} := \max_{j=1,\ldots,u} \left\{ \left| \overline{\Phi}_j^{(i)} - \hat{y}_i^{(j)} \right| \right\} \qquad\qquad (29).$$

$E_{90\%}^{(i)}$ ist derjeniger Wert, unterhalb dessen mindestens 90% der Absolutwerte der Abweichungen der Daten vom Modell liegen. Analog dazu ist $E_{80\%}^{(i)}$ derjenige Wert, unterhalb dessen mindestens 80% der Absolutwerte der Abweichungen der Daten vom Modell liegen. Mit dem optimalen Punkt $\overline{a}_i$ des Minimierungsproblems gemäß Gleichung (24) läßt sich ein Modell $\tilde{\Phi}^{(i)}$ des Erwartungswertes der Meßgröße $\Phi^{(i)}$ angeben zu

$$\tilde{\Phi}^{(i)} := R^n \to R \qquad\qquad (30),$$

$$x \to \overline{a}_i^{T} r(x) \qquad\qquad (31).$$

cInsbesondere läßt sich der Gradient $\nabla \tilde{\Phi}^{(i)}$ analytisch angeben mit

$$\nabla \tilde{\Phi}^{(i)}(x) = \frac{dr}{dx}(x) \cdot \overline{a}_i \quad \text{für alle } x \in R^n \qquad\qquad (32).$$

Literaturverzeichnis:

[1] WO 97 12300 A (BOIQUAYE WILLIAM J N O) 3. April 1997 (1997-04-03)

**Patentansprüche**

1. Verfahren zum Entwurf eines technischen Systems,

    a) bei dem Meßdaten eines vorgegebenen Systems anhand eines Ersatzmodells beschrieben werden;

b) bei dem eine Maßzahl für die Güte des Ersatzmodells ermittelt wird, indem die Meßdaten des vorgegebenen Systems mit durch das Ersatzmodell bestimmten Daten verglichen werden;

c) bei dem aus der Maßzahl für die Güte das Ersatzmodell dahingehend angepaßt wird, daß es eine möglichst hohe Güte aufweist;

d) bei dem das hinsichtlich seiner Güte angepaßte Ersatzmodell zum Entwurf des technischen Systems eingesetzt wird.

**2.** Verfahren nach Anspruch 1,
bei dem das Ersatzmodell ein Regressionsmodell ist.

**3.** Verfahren nach Anspruch 1 oder 2,
bei dem die Güte anhand einer quadratischen Abweichung der Meßdaten von den durch das Ersatzmodell bestimmten Daten ermittelt wird.

**4.** Verfahren nach einem der vorhergehenden Ansprüche,
bei dem die Meßdaten nach deren Güte, bezogen auf deren Abweichung von den durch das Ersatzmodell bestimmten Daten, sortiert werden und eine vorgegeben Anzahl von n% schlechtesten Meßdaten aussortiert werden.

**5.** Verfahren nach Anspruch 4,
bei dem die n% schlechtesten Meßdaten nicht aussortiert werden, wenn sie in einem zusammenhängenden Bereich liegen.

**6.** Verfahren nach einem der vorhergehenden Ansprüche,
bei dem die Menge der Meßdaten im Rahmen einer Vorverarbeitung reduziert wird.

**7.** Verfahren nach Anspruch 6,
bei dem die Vorverarbeitung eine Klasseneinteilung der Meßdaten umfaßt.

**8.** Verfahren nach einem der vorhergehenden Ansprüche,
bei dem die mittels Entwurf gewonnenen Daten zur Steuerung einer technischen Anlage eingesetzt werden.

**9.** Verfahren nach Anspruch 8,
zur Online-Anpassung der Steuerung für die technische Anlage.

**10.** Anordnung zum Entwurf eines technischen Systems,
mit einer Prozessoreinheit, die derart eingerichtet ist, daß

a) Meßdaten eines vorgegebenen Systems anhand eines Ersatzmodells beschrieben werden;
b) eine Maßzahl für die Güte des Ersatzmodells ermittelt wird, indem die Meßdaten des vorgegebenen Systems mit durch das Ersatzmodell bestimmten Daten verglichen werden;
c) aus der Maßzahl für die Güte das Ersatzmodell dahingehend angepaßt wird, daß es eine möglichst hohe Güte aufweist;
d) das hinsichtlich seiner Güte angepaßte Ersatzmodell zum Entwurf des technischen Systems eingesetzt wird.

**Claims**

**1.** Method for designing a technical system,

a) in which measurement data of a predetermined system are described on the basis of a substitute model;

b) in which a numerical value for the quality of the substitute model is determined by comparing the measurement data of the predetermined system with data determined by the substitute model;

c) in which the substitute model is adapted from the numerical value for the quality to be of as high a quality as possible;

d) in which the substitute model adapted with regard to its quality is used for designing the technical system.

2. Method according to Claim 1, in which the substitute model is a regression model.

3. Method according to Claim 1 or 2, in which the quality is determined on the basis of a mean square deviation of the measurement data from the data determined by the substitute model.

4. Method according to one of the preceding claims, in which the measurement data are sorted according to their quality, with respect to the deviation of the latter from the data determined by the substitute model, and a predetermined number of n% of the worst measurement data are picked out.

5. Method according to Claim 4, in which the n% of the worst measurement data are not picked out if they lie in a continuous range.

6. Method according to one of the preceding claims, in which the amount of measurement data is reduced in the course of a preprocessing operation.

7. Method according to Claim 6, in which the preprocessing operation comprises a classification of the measurement data.

8. Method according to one of the preceding claims, in which the data obtained by means of designing are used for controlling a technical plant.

9. Method according to Claim 8, for the online adaptation of the control for the technical plant.

10. Arrangement for designing a technical system, with a processor unit which is set up in such a way that

a) measurement data of a predetermined system are described on the basis of a substitute model;
b) a numerical value for the quality of the substitute model is determined by comparing the measurement data of the predetermined system with data determined by the substitute model;
c) the substitute model is adapted from the numerical value for the quality to be of as high a quality as possible;
d) the substitute model adapted with regard to its quality is used for designing the technical system.


**Revendications**

1. Procédé pour la conception d'un système technique

a) dans lequel des données de mesure d'un système donné sont décrites à l'aide d'un modèle de remplacement;
b) dans lequel un coefficient de la qualité du modèle de remplacement est déterminé par comparaison des données de mesure du système donné avec des données déterminées par ledit modèle de remplacement;
c) dans lequel le modèle de remplacement est adapté, sur la base dudit coefficient de sa qualité, de manière qu'il présente la meilleure qualité possible;
d) dans lequel le modèle de remplacement ainsi adapté pour ce qui est de sa qualité est utilisé pour la conception du système technique.

2. Procédé selon la revendication 1, dans lequel le modèle de remplacement est un modèle de régression.

3. Procédé selon la revendication 1 ou 2, dans lequel la qualité est établie à l'aide d'un écart quadratique des données de mesure par rapport aux données établies par le modèle de remplacement.

4. Procédé selon l'une des revendications précédentes, dans lequel les données de mesure sont triées selon leur qualité, en référence à leur écart par rapport aux données établies par le modèle de remplacement, et dans lequel un nombre prédéterminé de n % des données de mesure les plus mauvaises sont exclues.

**5.** Procédé selon la revendication 4, dans lequel les n % de données de mesure les plus mauvaises ne sont pas exclues lorsqu'elles se trouvent dans une plage cohérente.

**6.** Procédé selon l'une des revendications précédentes, dans lequel l'ensemble des données de mesure est réduit dans le cadre d'un prétraitement.

**7.** Procédé selon la revendication 6, dans lequel le prétraitement comprend une répartition des données de mesure selon des classes.

**8.** Procédé selon l'une des revendications précédentes, dans lequel les données obtenues au moyen de la conception sont utilisées pour le réglage d'une installation technique.

**9.** Procédé selon la revendication 8, servant à l'adaptation en ligne du réglage de l'installation technique.

**10.** Dispositif pour la conception d'un système technique, comprenant une unité de processeur configurée de manière que

a) des données de mesure d'un système donné sont décrites à l'aide d'un modèle de remplacement;
b) un coefficient de la qualité du modèle de remplacement est déterminé par comparaison des données de mesure du système donné avec des données déterminées par ledit modèle de remplacement;
c) le modèle de remplacement est adapté, sur la base dudit coefficient de sa qualité, de manière qu'il présente la meilleure qualité possible;
d) le modèle de remplacement ainsi adapté pour ce qui est de sa qualité est utilisé pour la conception du système technique.

FIG 1

| | |
|---|---|
| Meßdaten → Ersatzmodell | 101 |
| Maßzahl für Güte des Ersatzmodells bestimmen | 102 |
| Güte maximieren | 103 |
| Entwurf des technischen Systems | 104 |

105 Neuentwurf          Anpassung 106

FIG 2

$O_2$  CO  $NO_x$  $SO_2$

Dampferzeugung

204

204

Back Flow        Back Flow        Brennkammer 203

Char Bed

202          201

$Na_2S$  $Na_2CO_3$  $Na_2SO_4$

# FIG 3

| | Eingangsgrößen | |
|---|---|---|
| | Meßgröße | Beschreibung |
| 1 | FI 7081 | BL Fluß |
| 2 | QI 7082 A | Trockenbestandteile |
| 3 | FIC 7280 X | PA erste Luft |
| 4 | FIC 7281 X | SA zweite Luft |
| 5 | FIC 7282 X | TA dritte Luft |
| 6 | PI 7283 | PA Druck |
| 7 | PI 7284 | SA Druck |
| 8 | PHI 7285 | TA Druck |
| 9 | TIC 7288 X | PA Temperatur |
| 10 | TIC 7289 X | SA Temperatur |
| 11 | PIC 7305 X | Verschiebungsdruck |
| 12 | HO 7338 | Ölzylinder |
| 13 | TI 7347 | BL Temperatur |
| 14 | PIC 7349 X | BL Frontdruck |
| 15 | PIC 7351 X | BL Rückdruck |

# FIG 4

| | Stellgrößen | |
|---|---|---|
| | Meßgröße | Beschreibung |
| 1 | FIC 7280 X | PA erste Luft |
| 2 | FIC 7281 X | SA zweite Luft |
| 3 | FIC 7282 X | TA dritte Luft |
| 4 | PIC 7349 X | BL Frontdruck |

# FIG 5

| Ausgangsgrößen | | |
|---|---|---|
| | Meßgröße | Beschreibung |
| 1 | TIC 7249 X | Dampftemperatur |
| 2 | FI 7250 | Dampferzeugung |
| 3 | QI 7322 | $O_2$ |
| 4 | TI 7323 | Rauchtemperatur |
| 5 | QI 7331 | $H_2S$ |
| 6 | QI 7332 | $SO_2$ |
| 7 | QIC 7333 X | $CO$ |
| 8 | QIC 7370 X | Spez. Gewicht grüner Flüssigkeit |
| 9 | QI 7531 | $NO$ |
| 10 | IBM 8096 | Reduktionseffizienz |
| 11 | IBM 8109 | PH Wert |
| 12 | TI 7352 | Bett-Temperatur |
| 13 | IBM 8015 | $NaOH$ |
| 14 | IBM 8016 | $Na_2S$ |
| 15 | IBM 8017 | $Na_2CO_3$ |